# EUROPEAN PATENT APPLICATION

(11) **EP 1 253 125 A2**
(43) Date of publication of application: **30.10.2002**
(21) Application number: 99943472.3
(22) Date of filing: 10.09.1999
(51) Int. Cl.: C05F 11/08, A01N 63/04

(54) **PROCESS FOR FABRICATING 100 % ORGANIC-BIOLOGIC FERTILIZER/DEPARASITIZER**

(30) Priority: 10.09.1998 MX 9807371
(71) Applicant: Garcia Urbina, Juan Alfonso, La Paz, Baja California Sur 23080 (MX)
(72) Inventor: Garcia Urbina, Juan Alfonso, La Paz, Baja California Sur 23080 (MX)
(74) Representative: Elzaburu, Alberto de
(86) International application number: MX9900026
(87) International publication number: WO00015582

(57) **Abstract**

Currently, the fertilizer's manufacturing process and parasite remover products for agricultural purposes are of chemical nature, with the consequential risk for the environment and health, public problems that are well documented. The difficulty to obtain substitute products and susceptible of industrial development has been resolved with the current process, where it is obtained a 100% organic-biologic fertilizer/parasite remover with no harm for the environment and the human health while obtained and used, through the following stages:
1] Mix the **Chrysosporium ambari** with water, potato juice, and dehydrated molasses, homogenize at intervals, until complete the process in 48 hours since the beginning. 2] Test the pH=3 of turbid yellow color of the mixture and a floating material in light brown color sludge. The product obtained is different to the ones existing in the agricultural market, due to an innovative and simple process, available for industrial development. The main characteristic is the soil restoration, with the effciency advantage over all products sold separately in the market, and with a non-restricted use.

## Description

Conventional manufacturing processes to obtain agricultural products, based on a variety of ingredients as fertilizers, fungicides, insecticides, nematicides, and water pH acid regulators, are well known. In general, they could be classified as harmful agrochemical products for urban and rural environments [rivers, soil, and atmosphere], and the public health [fumigators and consumers], in regards to their fabrication procsses as well as their uses, public problems that are well documented. And the organic and/or biologic type ones obtained from different materials as seed oils, composites, and varius predators living in more restricted areas in regards to specific environmental conditions, as their natural habitat, in some form limiting the efficiency and difficulting their industrialization.
With the purpose avoiding this situation and any other inconvenient, I developed the current process [10 to 45° Celsius], with permanent solar light, which is efficiently achieved in the south zone of the State of Baja California Sur. Here the fungus-bacteria **Chrysosporium ambari,** [I named the specie], in order to obtain a product for agriculture and public health use, it is found naturally. It is found useful at 5 to 100% doses as 100% organic-biologic fertilizer/parasite remover, that is to be protected through this application, because it is a process to obtain a product integrated by only one multifaceted agent that more efficiently balances the environment and health that the ones constituted by a number of active chemical ingredients, biological control predator agents, and a variety of organic materials used as insect repellents in the market. As this newest product stops the salt accumulation, when inoculated into the ground, it allows an efficient nutrition of plants, and with no harmful affects for beneficial insects living in the plant. It is developed free of diseases and plague, without affecting the agicultural fumigators and the consumer's health. This product has the peculiarity for finding uses in agriculture and health, and presenting a wide spectrum for non-restricted uses, restoring the soil and the environment where it is applied using a dripping system and fumigation. As it was previously explained, it is confirmed that the process characteristics to obtain the 100% organic-biologic fertilizer/parasite remover [pH=3] where not achieved by any other similar product, and it has the same characteristics of use from all similar products known and applied in agriculture.

The characteristic details of this new process to manufacture the 100% organic-biologic fertilizer/parasite remover are clearly shown in the current description, and the enclosed drawings.

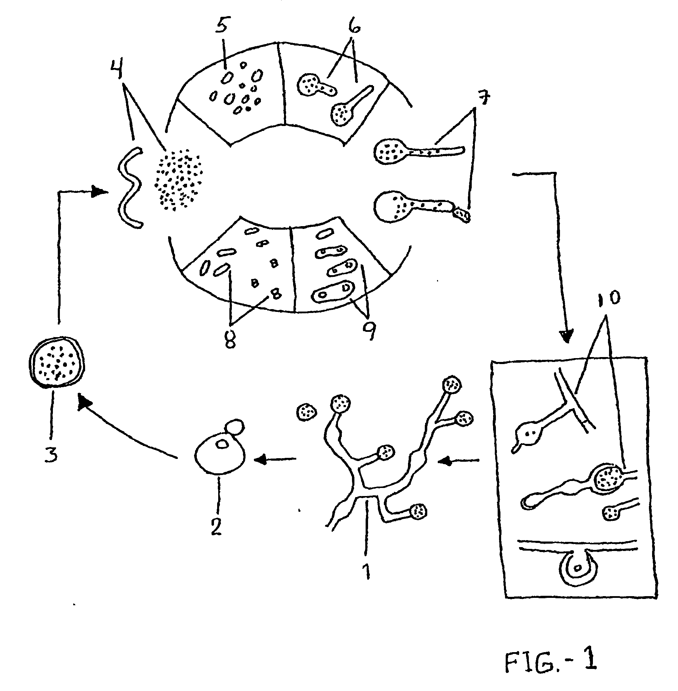

When the fungus-bacteria **Chrysosporium ambari,** is mixed in a liquid medium [potato-molasses-water juice], it grows and produces progressive and simultaneous phases through cells with a variety of shapes and sizes [figure 1], in variable volume stainless translucent recipients; where it is cultivated.
First, the fungus-bacteria liquid layer, named **Chrysosporium ambari,** is emptied into a recipient to 1/20 of the volume to be prepared, and it is ganged with drinking water. After gauging, 10 to 40 kilograms of dehydrated molasses are emptied for each 1000 liters of drinking water and for 12 to 50 liters of non-starched potato juice. The mixture is homogenized in the recipient and settled 24 hours naturally, and exposed to direct solar light so the product can be used after the next 24 hours.

So it is obtained a product for agricultural use that can be applied to irrigation systems and fumigation as 100% organic-biologic fertilizer/parasite remover with fertilizer, fungicide, insecticide, nematicide, irrigation water pH regulator, and digestive system parasite remover characteristics, where the process stages are the following:
1) Mix the fungus-bacteria **Chrysosporium ambari** layer, the drinking water, the potato juice, and the molasses. Stir the mixture until the content is homogenized, leave exposed to the environment, and direct solar light, stirring again after 24 hours, and completing the process the next 24 hours.
2) Test the pH=3 of the product obtained in 48 hours, since the the process was initiated, yellow turbid color in the liquid, light brown color floating sludge that changes into black color afterwards, and the figures that represent **Chrysosporium ambari** in all phases.

### BEST METHOD TO CARRY OUT THE INVENTION.-

The following example is offered to illustrate the new product and the use of the current invention, not to improperly limit the same.

### EXAMPLE.- OBTENTION OF 100% ORGANIC-BIOLOGIC FERTILIZER / PARASITE REMOVER

1.- Empty 1/20 of the fungus-bacteria **Chrysosporium ambari** in suspension into a translucent plastic recipient and gauge with drinking water to total volume.
2.- Empty 22 liters of non-starch potato juice, for each 1000 liters of water to be used.
3.- Empty 23 kilograms of dehydrated molasses, for each 1000 liters of water to be used. Stir the mixture until all the volume is homogenized, leave the recipient without lid and exposed to the environment, and the direct solar light. Stir after 24 hours and use the product the next 24 hours.
4.- Test the pH=3 of the product at 48 hours, completion of the process, a light brown color that changes into black color, constituted by cells [figure 1] in process to change into mycelium, and it can be recycled when stirring with a pump for liquids.

The manufacturing process for the 100% organic-biologic fertilizer/parasite remover and the use characteristics constitute, in part, the latest innovation of the biological product. Any other similar product has not achieved these characteristics, and it has the simplest and fastest production characteristics, which will allow its industrialization. Another supplemental characteristics of this process, and the product to obtain, is that the fabrication and usage do not represent a risk for the environment and health. It can be ingested to remove parasites from the digestive system.

## Claims

1. Process to manufacture a turbid yellow color liquid product in normal conditions with permanent solar luminosity [10 to 45°Celsius], for agricultural use and public health characterized as 100% organic-biologic fertilizer/parasite remover [pH=3], from the mixed fungus-bacteria named **Chrysosporium ambari** with drinking water, potato juice, and dehydrated molasses, that are stirred at intervals in translucent recipients, and capable of industrial production.

2. The process according to clause 1, **characterized by** the variety of fungus-bacteria **Chrysosporium ambari** unknown phases in their usage methods.

3. The process according to clause I, **characterized by** 100% organic-biologic manufacturing components, and the final product manufactured to be used from 5 to 100% in water.

4. The process according to clause I, **characterized by** the use of 10 to 40 kilograms of dehydrated molasses by each 1000 liters of drinking water.

5. The process according to clause I, **characterized by** the use of 12 to 50 liters of potato juice by each 1000 liters of drinking water.
